**Europäisches Patentamt**

**European Patent Office**

**Office européen des brevets**

(11) Veröffentlichungsnummer: **0 250 441**
**B1**

(12) **EUROPÄISCHE PATENTSCHRIFT**

(45) Veröffentlichungstag der Patentschrift:
23.11.88

(51) Int. Cl.⁴: **F 16 H 5/40**

(21) Anmeldenummer: **86902827.4**

(22) Anmeldetag: **19.04.86**

(86) Internationale Anmeldenummer:
**PCT/EP 86/00237**

(87) Internationale Veröffentlichungsnummer:
**WO 86/06809 (20.11.86 Gazette 86/25)**

(54) **HYDRAULISCHE STEUERUNG FÜR AUTOMATISCH ZU SCHALTENDE FAHRZEUG-GETRIEBE.**

(30) Priorität: **04.05.85 PCT/EP85/00201**

(43) Veröffentlichungstag der Anmeldung:
**07.01.88 Patentblatt 88/1**

(45) Bekanntmachung des Hinweises auf die Patenterteilung:
**23.11.88 Patentblatt 88/47**

(84) Benannte Vertragsstaaten:
**DE FR GB IT SE**

(56) Entgegenhaltungen:
**US-A-4 005 620**
**US-A-4 263 826**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **FURTNER, Horst, Goethestrasse 25, D-7993 Kressbronn (DE)**
Erfinder: **GERTEISER, Eugen, Schubertstrasse 14, D-7991 Eriskirch (DE)**
Erfinder: **GIERER, Georg, Zehntscheuerstrasse 44, D-7993 Kressbronn (DE)**

(74) Vertreter: **Raue, Reimund, Zahnradfabrik Friedrichshafen AG Löwentaler Strasse 100 Postfach 2520, D-7990 Friedrichshafen 1 (DE)**

## Beschreibung

Die Erfindung betrifft eine hydraulische Steuerung nach dem Oberbegriff von Anspruch 1.

Aus ADZ, 77. Jahrgang, Heft 9 (1975), Seite 246 bis 249, ist eine vergleichbare hydraulische Steuerung bekannt, in der die Schaltpunkte in Abhängigkeit von der Motorlast und der Geschwindigkeit festgelegt sind. Dem Hauptdruckventil nachgeschaltet ist ein Drosseldruckventil, das unabhängig von der Wählhebelposition einen motorlastabhängigen Druck erzeugt. Ein Nocken, der über einen Gaskabelzug entsprechend der Gaspedalstellung verdreht wird, verschiebt den Kolben des Ventils, so daß die Feder je nach angeforderter Motorlast vorgespannt wird und damit der lastabhängige Druck, der Drosseldruck, erzeugt wird. Parallel zum Drosseldruckventil sitzt noch ein Modulationsventil, dem gleichfalls Arbeitsdruck und auch Drosseldruck zugeführt wird. Der Modulationsdruck ist entsprechend dem Flächenverhältnis von Ventil und Kolben meist größer als der Drosseldruck und verändert den Arbeitsdruck in Abhängigkeit der Motorlast zur Beeinflussung der Schaltdrucksysteme, die den Druck in den Servokolben während des Schaltvorganges bestimmen. Der fahrgeschwindigkeitsabhängige Druck wird durch den auf der Abtriebswelle angeordneten Regler erzeugt, und Sperrventile haben die Aufgabe, in Wählpositionen, z. B. 1, 2 oder 3, Rückschaltung in die unteren Gänge über einer vorbestimmten Geschwindigkeit zu verhindern. Weiter werden auch Hochschaltungen in Gänge oberhalb der gewählten Position nicht zugelassen.

Solche und ähnliche hydraulische Steuerungen haben sich bei Fahrzeugen mit einem Saugmotor in Verbindung mit einem automatisch zu schaltenden Getriebe bewährt, weil über das Drosseldruckventil und dem Regler die Motorlastabhängigkeit und die Fahrgeschwindigkeit ausreichend genau zur Bestimmung der Schaltpunkte und zum Ein- und Ausschalten der Schaltelemente ermittelt und als Drossel- und Reglerdruck auf das Schaltdrucksystem übertragen wird. Notwendige Überschneidungsschaltungen - eine Schaltkupplung oder Bremse wird gelöst und eine zweite wird eingeschaltet - werden mit Hilfe der vorbenannten Drücke über Schalt- und Zeitsteuerventile so durchgeführt, daß es keinen nennenswerten Schaltdruck, der für den Fahrer und die Insassen eines Fahrzeuges unangenehm ist, gibt.

Bei Fahrzeugen mit einem aufgeladenen Motor befriedigt jedoch eine derartige Steuerung nicht, weil allein aus der Gashebelstellung das Motormoment zu ungenau ableitbar ist.

Aus der US-PS-4 263 826 ist schon bekannt den Ladedruck für die Verbesserung der Schaltqualität für ein Automatgetriebe bei der Verwendung von aufgeladenen Motoren mit heranzuziehen. Dabei wird der Ladedruck über eine Leitung 14 einem zusätzlich angeordneten Gasdruck-Modulationsventil 106/108 zugeführt und das Schaltdrucksystem beeinflußt. Bei dieser Anordnung wird zwar über den Ladedruck die Schaltqualität verbessert, der Aufwand dazu ist aber infolge des zusätzlichen Ventils hoch.

Es ist deshalb Aufgabe der Erfindung, eine hydraulische Steuerung nach dem Oberbegriff von Anspruch 1 weiterzuentwickeln. Dabei soll der bauliche und steuerungsmäßige Aufwand auf ein Minimum beschränkt bleiben.

Diese Aufgabe wird mit den kennzeichnenden Merkmalen von Anspruch 1 erfüllt.

Mit der Zuführung des Ladedruckes an mindestens ein Rückschaltventil ist es möglich, die Funktion mindestens dieses Rückschaltventiles ladedruckabhängig zu beeinflussen. Für die Einhaltung eines ausreichenden Druckes während einer Schaltung in der bei einer Rückschaltung zu lösenden Kupplung oder Bremse wird z. B. das 4/3-Rückschaltventil benützt. Der oder die Kolben dieses Rückschaltventils, das als Modulationsventil arbeitet, wird von einem geschwindigkeitsabhängigem Reglerdruck und/oder von einer diesem Arbeitsdruck angepaßten Feder beeinflußt. Das Druckniveau des Arbeitsdruckes während der Rückschaltung wird zusätzlich vom Ladedruck beeinflußt, da in Abhängigkeit von der Motordrehzahl und Drosselklappenöffnung - Gashebelstellung - das Motormoment vor und während der Rückschaltung unterschiedlich sein kann.

Wird der Ladedruck unmittelbar, also ohne jegliche Umwandlung, in den Federraum des Druckventils geleitet, ist der Aufbau besonders einfach, weil keinerlei Druckdosen für die Umwandlung des Druckes benötigt werden. Eventuell auftretende Dichtprobleme sind durch die Anordnung von relativ langen Dichtflächen bzw. durch Manschetten in einfacher Weise lösbar.

Es zeigen:

Fig. 1; 1A    ein Steuerschema,
Fig. 2        ein Druckzeitdiagramm einer Überschneidungsschaltung,
Fig. 3        ein vereinfachtes Steuerschema nach Fig. 1, mit Ladedruckzuführung,
Fig. 4        ein 4/3-Schaltventil,
Fig. 5        ein 4/3-Schaltventil nach Fig. 4, in einer anderen Ausgestaltung.

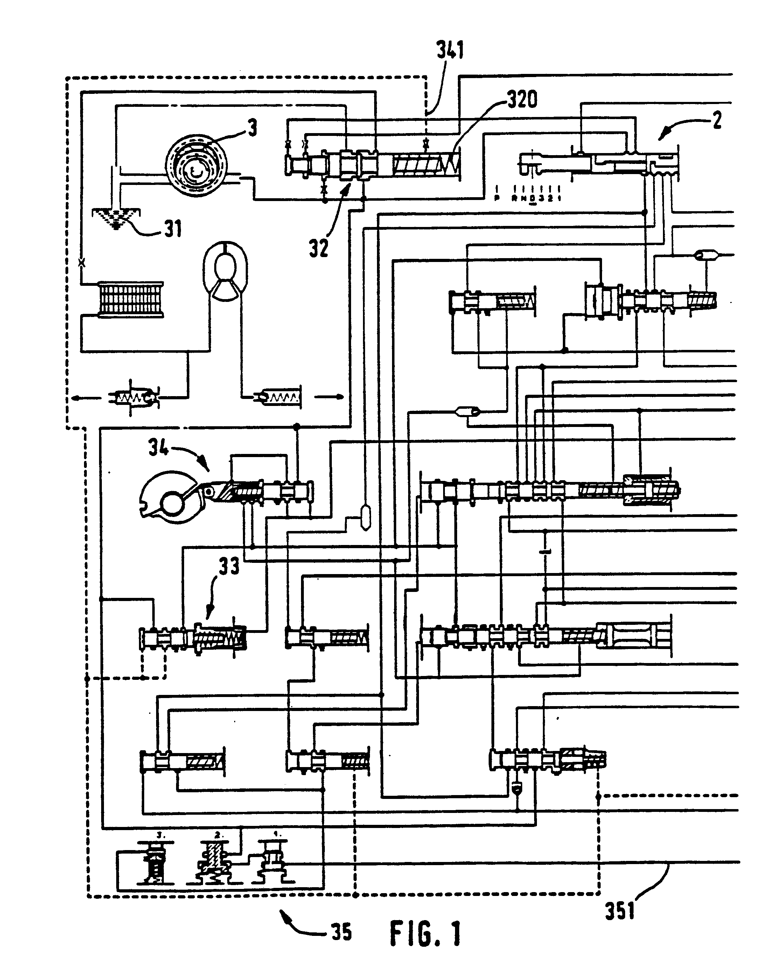

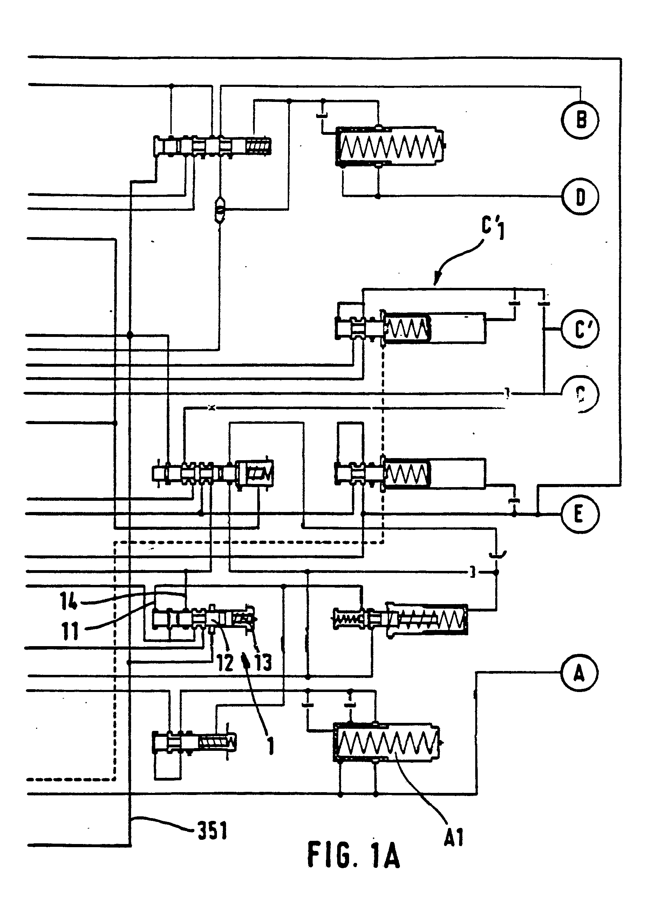

In dem Steuerschema nach Fig. 1 befindet sich der Wählschieber 2 in der Stellung D, die einer unbeschränkten automatischen Fahrweise entspricht. Der Druck wird von einer Pumpe 3 aufgebaut, die Öl aus dem Sumpf 31 des Getriebes ansaugt und an das Hauptdruckventil 32 fördert. Dieses arbeitet als Modulationsventil. Der Druck ist abhängig von der Feder 320 und einem Schaltdrosseldruck-Leitung 341. Dieser wird im Schaltdrosselventil 34 und

Modulationsventil 33 in Abhängigkeit von der Gashebelstellung erzeugt. In den Gängen 1 bis 3 wird dieser Druck dem Rückschaltventil 4/3 1 über die Leitung 11 zugeleitet, so daß der oder die Kolben 12 entgegen dem Druck der Feder 13 in die rechte Endstellung verschoben wird. Damit ist das Rückschaltventil 4/3 in diesen Gangstellungen blockiert. Im 4. Gang wird der Hauptdruck ausschließlich über die Leitung 14 dem Rückschaltventil 4/3 1 zugeleitet. Ein geschwindigkeitsabhängiger Druck wird im Regler 35 erzeugt und kann gleichfalls dem Rückschaltventil 4/3 1 zugeleitet werden - Leitung 35'. Mit C' ist die Bremse bezeichnet, die bei einer Rückschaltung vom 4. in den 3. Gang löst, und mit A die Kupplung, die bei dieser Schaltung aktiviert wird. Der Bremse C' ist noch das Kupplungsventil plus dem Dämpfer C'1 und der Kupplung A der Dämpfer A1 zugeordnet.

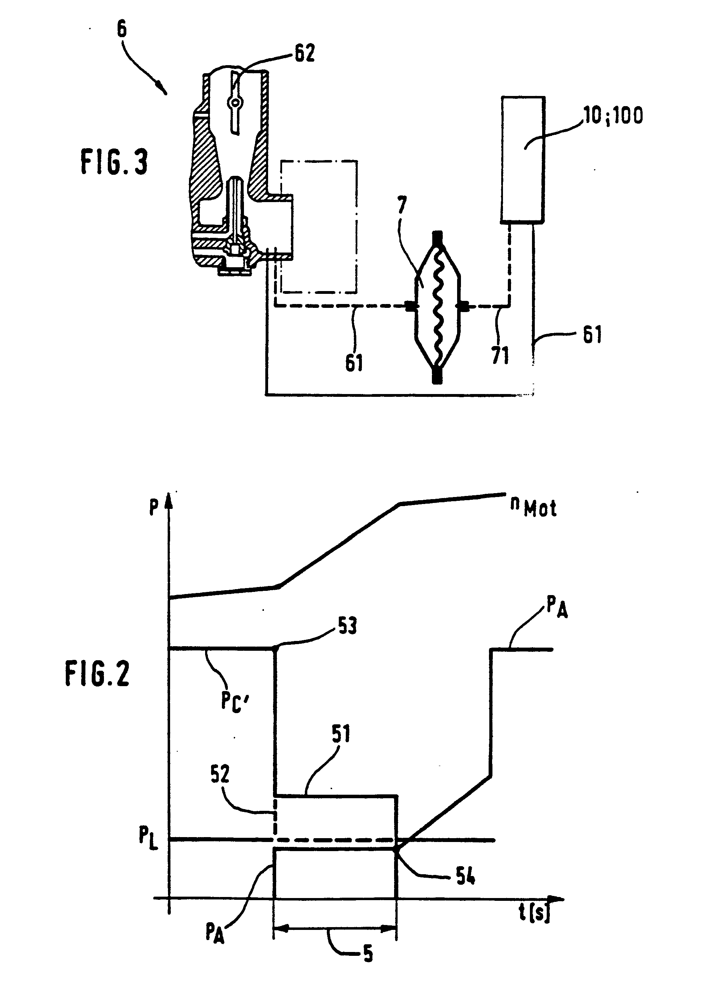

In Fig. 2 ist eine Überschneidungsschaltung, z. B. eine Zugrückschaltung, aus dem 4. in den 3. Gang dargestellt. Dabei ist PC' der Druckverlauf der zu lösenden Bremse C' und PA der Druckverlauf der einzuschaltenden Kupplung A. Mit 5 ist die Ausschalt- und Einschaltverzögerung der Bremse C' und Kupplung A dargestellt und die Kurve $n_{Mot}$ gibt die Drehzahl des Motors während der Umschaltung an. Die Kurve PL soll den Ladedruck darstellen.

Die Überschneidungsschaltung aus dem 4. in den 3. Gang im Zugbetrieb wirkt wie folgt.

In Vollgasstellung des Gaspedals, z. B. Kickdown, und bei einer vorher festgelegten Drehzahl im Antriebsstrang, wird die Rückschaltung vom 4. in den 3. Gang ausgelöst. Dabei fällt der Druck in der Bremse C' entsprechend der schematisierten Kurve PC' ab und in der einzuschaltenden Kupplung A wird im gleichen Zeitraum der Druck entsprechend der Kurve PA aufgebaut. Während der Ein- und Ausschaltverzögerungen 5 nimmt die Kurve PC' ohne Ladedruckbeeinflussung den Verlauf nach 52 und mit Ladedruck nach 51. Dabei kann der in der Horizontalen dargestellte Kurvenverlauf 51 entsprechend des wirklichen Ladedruckes jede Form einnehmen und ist in diesem Beispiel vereinfacht nur als Gerade dargestellt. Bis zum Punkt 53 wird also das Motormoment ausschließlich über die Bremse C' und ab Punkt 54 über die Kupplung A übertragen. Zwischen diesen beiden Punkten in der Zeit der Anzugs- und Ausschaltverzögerung 5 erfolgt die Momentübertragung in der Bremse C'. Durch die Einbeziehung des Ladedrucks in die Modulation des 4/3-Rückschaltventils für den Hauptdruck der auszuschaltenden Bremse C' erfolgt eine realere Anpassung des Anliegedruckes an die zu übertragenden Drehmomente, was bei Lademotoren allein durch die Modulation nach der Gashebelstellung und der im Rückschaltventil 1 angeordneten Feder 13 nicht gegeben ist.

Fig. 3 zeigt schematisch einen Vergaser 6, eine Druckdose 7 und das Rückschaltventil 4/3 Nr. 10. Dabei kann der Ladedruck-Leitung 61 - dem Rückschaltventil 4/3 direkt oder über eine Druckdose 7 als hydraulischer Druck - Leitung 71 - zugeführt werden.

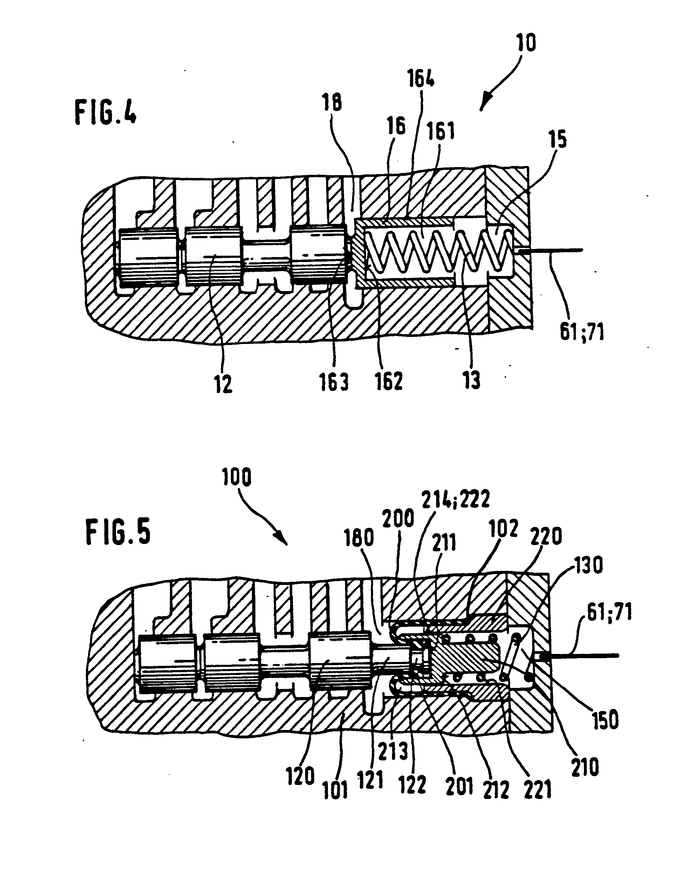

Bei der direkten Zuführung in gasförmiger Form ist im Federraum 15 - Fig. 4 - des Rückschaltventils 10 ein Dichtkörper 16 so angeordnet, daß eine relativ große Dichtfläche 164 den mit Ladedruck beaufschlagten Federraum 15 gegenüber den hydraulisch beaufschlagten Kolbenräumen 18 des Rückschaltventiles 10 abdichtet, wie das nach Fig. 4 durch den topfförmigen Dichtkörper 16, an dessen inneren Boden 162 sich die Feder 13 abstützt, dargestellt ist. Der äußere Boden 163 des Dichtkörpers 16 drückt auf den Kolben 12.

Eine zweite Dichtlösung ist aus der Fig. 5 zu ersehen. In einer auf dem Schaft 121 eines Kolbens 122 angeordneten Rille 122 ist die Wulst 201 einer an sich dünnwandigen Manschette 200 gelagert und wird von einem Haltekörper 210 eingespannt. Am Ventilkörper 101 ist die Manschette mit Hilfe eines Klemmkörpers 220 eingespannt, so daß der Federraum 150 gegenüber den Kolbenräumen 180 sicher abgedichtet ist. Der Haltekörper 210 wird noch von der Feder 130 beaufschlagt und macht die Längsbewegungen des Kolbens 120 im Zusammenhang mit der Druckmodulation mit. Demgegenüber ist der Klemmkörper 220 im Ventilgehäuse befestigt. Da infolge der absoluten Dichtung durch die Manschette die Berührungsflächen 213/221 zwischen dem Klemmkörper 220 und dem Haltekörper 210 leichtgängig ausgeführt werden können - Spalt 214/222 -, wird die Modulationsbewegung des Kolbens 120 durch Reibung nicht ehindert.

Bezugzeichen

| 1, 10, 100 | Rückschaltventil 4/3 |
|---|---|
| 101 | Ventilkörper |
| 102 | Bohrungsansatz |
| 11 | Leitung |
| 12, 120 | Kolben |
| 121 | Schaft |
| 122 | Rille |
| 13, 130 | Feder |
| 14 | Leitung |
| 15, 150 | Federraum |
| 16 | Dichtkörper |
| 161 | Innenraum |
| 162 | Boden innen |
| 163 | Boden außen |
| 164 | äußere Zylinderfläche |
| 18, 180 | Kolbenraum |
| 2 | Wählschieber |
| 3 | Pumpe |
| 31 | Sumpf |
| 32 | Hauptdruckventil |
| 320 | Feder |
| 33 | Modulationsventil |
| 34 | Schaltdrosseldruckventil |
| 341 | Leitung |
| 35 | Regler |
| 36 | Zeitsteuerventil |
| 4 | Wählschieber |
| 5 | Anzugs-Ausschaltverzögerung |

| 51 | Kurve mit Ladedruck |
| 52 | Kurve ohne Ladedruck |
| 53 | Schaltbeginn |
| 54 | Ende der Schaltung |
| 6 | Vergaser |
| 61 | Leitung Ladedruck |
| 62 | Drosselklappe |
| 7 | Druckdose |
| 71 | Leitung hydraulischer Druck |
| 200 | Manschette |
| 201 | Wulst |
| 210 | Haltekörper |
| 211 | Bohrung |
| 212 | Bund |
| 213 | Berührungsfläche/Führungsflächen |
| 214/222 | Spalt |
| 220 | Klemmkörper |
| 221 | Berührungsfläche |
| | |
| C' | Bremse |
| C'1 | Kupplungsventil mit Dämpfer |
| A | Kupplung |
| A1 | Dämpfer |
| PL | Ladedruck |
| PC' | Anpreßdruck |

**Patentansprüche**

1. Hydraulische Steuerung für automatisch zu schaltende Fahrzeug-Getriebe, mit Schaltventilen zur Beaufschlagung von Schaltkupplungen/Bremsen (A, C') mit einem Arbeitsdruck, wobei die Schaltpunkte der Schaltventile und der Arbeitsdruck in Abhängigkeit von der Motorlast (Gashebelstellung) und der Geschwindigkeit festgelegt sind und als Steuerdrücke (Drossel- und Reglerdrücke) den Schaltventilen zugeführt werden, dadurch gekennzeichnet, daß bei Fahrzeugen mit aufgeladenen Motoren zur Beeinflussung der Schaltqualität mindestens einem Rückschaltventil (1, 10, 100) der Ladedruck (PL, Leitung 61, 71) zugeführt wird.

2. Hydraulische Steuerung nach Anspruch 1, dadurch gekennzeichnet, daß der Ladedruck (PL, Leitung 61) mindestens einem Rückschaltventil (1, 10, 100) unmittelbar zugeführt wird.

3. Hydraulische Steuerung nach Anspruch 1, dadurch gekennzeichnet, daß der Ladedruck (PL, Leitung 61) über einen Druckumsetzer (Druckdose 7) in einen hydraulischen Druck (Leitung 71) umgewandelt wird und mindestens einem Rückschaltventil (1, 10, 100) zugeführt wird.

4. Hydraulische Steuerung nach Anspruch 2, dadurch gekennzeichnet, daß der Ladedruck (PL) dem Federraum (15, 150) des Rückschaltventils 4/3 (1, 10, 100) zugeleitet wird und die Wirkung der Feder (13, 130) unterstützt, so daß der Anpreßdruck (PC') der zu lösenden Kupplung/Bremse (C') während der Schaltung (Ausschaltverzögerung 5) ladedruckabhängig (PL) auf einem höheren Niveau (Kurve 51) gehalten wird.

5. Hydraulische Steuerung nach Anspruch 4, dadurch gekennzeichnet, daß im Federraum (15) des Rückschaltventiles 4/3 (10) ein Dichtkörper (16) in Form eines Hohlkolbens angeordnet ist, dessen Innenraum (161) eine Feder (13) aufnimmt, die auf den Boden (162) drückt, der äußere Boden (163) sich am Kolben (12) abstützt und die äußere Zylinderfläche (164) den Federraum (15) gegenüber dem Kolbenraum (18) abdichtet, dem über die Leitung (61) Ladedruck (PL) zugeführt wird, wobei der Dichtkörper (16) zur Verbesserung der Dichtung relativ lang bemessen ist.

6. Hydraulische Steuerung nach Anspruch 4, dadurch gekennzeichnet, daß auf dem Schaft (121) des Kolbens (120) in einer Rille (122) die Wulst (201) einer Manschette (200) gelagert ist und mit der Bohrung (211) des Haltekörpers (210) geklemmt wird, das andere Ende der dünnwandigen Manschette (200) mit einem Klemmkörper (220) in einem Bohrungsansatz (102) im Ventilkörper (101) eingespannt ist und den Federraum (150) vom Kolbenraun, (180) abdichtet, die Druckfeder (130) mit der einen Seite gegen einen Bund (212) des Haltekörpers (210) drückt und mit dem anderen Ende am Ventilgehäuse (Ventilkörper 101) sich abstützt, wobei die Führungsflächen (Zylinder 213, Bohrung 221) zur besonderen Leichtgängigkeit des Kolbens 120 kurz und mit einem Spalt (214/222) ausgeführt sind und daß dem Federraum (150) Ladedruck direkt zugeleitet wird.

**Claims**

1. A hydraulic control for automatically operating change-speed gear in motor vehicles, with pilot valves for the operation of shifting couplings/brakes (A, C') with a working pressure, in which the switch points of the pilot valves and the working pressure are set in dependence of the engine load (accelerator position) and of velocity and are fed to the pilot valves as control pressures (throttle and regulator pressures), characterised in that in vehicles with supercharged engines the boost pressure (FL, Line 61, 71) is fed to at least one reversing pilot valve (1, 10, 100) for influencing shift quality.

2. A hydraulic control according to Claim 1, characterised in that the boost pressure (PL, line 61) is fed directly to at least one reversing pilot valve (1, 10, 100).

3. A hydraulic control according to Claim 1, characterised in that the boost pressure (PL, line 61) is transformed by a pressure converter (pressure element 7) into a hydraulic pressure (line 71) and is fed to at least one reversing pilot valve (1, 10, 100).

4. A hydraulic control according to Claim 2, characterised in that the boost pressure (PL) is fed to the spring chamber (15, 150) of the 4/3 reversing pilot valve (1, 10, 100) and promotes the action of the soring, so that the contact pressure (PC') of the coupling/brake (C') to be released is held in dependence of the boost pressure (PL) at a higher level (curve 51) during the shirt (clutch delay 5).

5. A hydraulic control according to Claim 4, characterised in that in the spring chamber (15) of the 4/3 reversing pilot valve (10) a sealing element (16) having the form of a hollow piston is arranged, the hollow space (161) of which accomodates a spring (13) which presses on the bottom (162), while the outer bottom (163) bears on the piston (12) and the outer cylinder surface (164) seals off the spring chsmber (15) from the piston chamber (18) to which boost pressure (PL) is fed through the line (61), and wherein the sealing element (16) is given a relatively long dimension to improve sealing.

6. A hydraulic control according to claim 4, characterised in that on the shaft (121) of the piston (120) in a groove (122) the bead (201) of a sleeve (200) is mounted and is clamped by the bore (211) of the receiving body (210), while the other end of the thin-walled sleeve (200) is tensioned by means of a clamp element (220) in a bore extension (102) in the valve body (101) and seals off the spring chamber (150) from the piston chamber (180), urging the compression spring (130) with one side against a shoulder (212) of the receiving body (210) and bears with the other end against the valve housing (valve body 101), wherein the guiding surfaces (cylinder 213, bore 221) are constructed short and with a gap (214/222) for particular ease of movement of piston 120 and wherein boost pressure is fed directly to the spring chamber (150).

**Revendications**

1. Commande hydraulique pour boîte de vitesses automatique d'un véhicule à moteur, comportant des soupapes de commande pour actionner des embrayages ou freins de commutation (A, C') par une pression de travail, dans laquelle les points de commutation des soupapes de commande et la pression de travail sont déterminés en fonction de la charge du moteur (position de l'accélérateur) et de la vitesse et sont transmis aux soupapes de commande sous la forme de pressions de commande (pressions au papillon et au régulateur), caractérisée en ce que, pour influencer la qualité de commutation dans des véhicules à moteur suralimenté, la pression de suralimentation (PL, conduite 61, 71) est transmise à au moins une soupape de rétrogradation (1, 10, 100).

2. Commande hydraulique selon la revendication 1, caractérisée en ce que la pression de suralimentation (PL, conduite 61) est transmise directement à au moins une soupape de rétrogradation (1, 10, 100).

3. Commande hydraulique selon la revendication 1, caractérisée en ce que la pression de suralimentation (PL, conduite 61) est transformée en une pression hydraulique (conduite 71) au moyen d'un convertisseur de pression (boîte de pression 7) et est transmise à au moins une soupape de rétrogradation (1, 10, 100).

4. Commande hydraulique selon la revendication 2, caractérisée en ce que la pression de suralimentation (PL) est introduite dans une chambre à ressort (15, 150) de la soupape de rétrogradation 4/3 (1, 10, 100) et soutient l'action du ressort (13, 130) de façon à maintenir à un niveau accru (courbe 51) pendant le changement de vitesses (retard de débrayage 5), en fonction de la pression de suralimentation (PL), la pression de serrage (PC') de l'embrayage ou frein à déclencher (C').

5. Commande hydraulique selon la revendication 4, caractérisée en ce que la chambre à ressort (15) de la soupape de rétrogradation 4/3 (10) contient un élément d'étanchéité (16) en forme de piston creux dont l'intérieur (161) renferme un ressort (13) qui pousse son fond (162), en ce que l'extérieur (163) du fond de cet élément est en appui contre le piston (12) et en ce que la surface cylindrique extérieure (164) de cet élément ferme de manière étanche par rapport à la chambre du piston (18) la chambre à ressort (15) dans laquelle la pression de suralimentation (PL) est introduite par une conduite (61), ledit élément d'étanchéité (16) ayant des dimensions relativement longues pour augmenter l'étanchéité.

6. Commande hydraulique selon la revendication 4, caractérisée en ce qu'un bourrelet (201) d'une manchette (200) est monté dans une rainure (122) sur le fût (121) du piston (120) et est fixé par serrage au moyen de l'alésage (211) de l'élément de maintien (210), en ce que l'autre extrémité de la manchette à paroi mince (200) est fixée dans un élargissement (102) de l'alésage du corps de soupape (101) au moyen d'un élément de serrage (220) pour rendre étanche la chambre à ressort (150) par rapport à la chambre à piston (180), en ce que le ressort de compression (130) est appuyé d'un côté contre un rebord (212) de l'élément de maintien (210) et de l'autre côté contre le boîtier de soupape (corps de soupape 101), les surfaces de guidage (cylindre 213, alésage 221) étant agencées avec une faible longueur et un intervalle (214/222) pour faciliter le mouvement du piston (120), et en ce que la pression de suralimentation est introduite directement dans la chambre à ressort (150).

FIG. 1

**FIG. 1A**

FIG.3

FIG.2

## FIG.4

## FIG.5